# EUROPEAN PATENT SPECIFICATION

(11) **EP 3 677 793 B1**
(45) Date of publication and mention of the grant of the patent: **31.08.2022**
(21) Application number: 18849615.2
(22) Date of filing: 11.05.2018
(51) Int. Cl.: F15B 3/00, F15B 13/042

(54) **PRESSURE BOOSTER**
DRUCKVERSTÄRKER
MULTIPLICATEUR DE PRESSION

(30) Priority: 30.08.2017 JP 2017164945; 20.02.2018 JP 2018028002
(43) Date of publication of application: 08.07.2020
(73) Proprietor: SMC Corporation, Tokyo 101-0021 (JP)
(72) Inventor: TAKADA Yoshiyuki, Tokyo 101-0021 (JP); MONDEN Kengo, Tsukubamirai-shi Ibaraki 300-2493 (JP); SOMEYA Kazutaka, Tsukubamirai-shi Ibaraki 300-2493 (JP)
(74) Representative: Keil & Schaafhausen Patentanwälte PartGmbB
(86) International application number: PCT/JP2018/018386
(87) International publication number: WO 2019/044047

(56) References cited:
- EP-A2- 0 193 498
- WO-A1-2014/015903
- WO-A1-2015/040572
- JP-A- H0 821 404
- JP-A- S6 043 184
- JP-A- H10 267 002
- JP-A- S60 227 001
- JP-A- 2003 054 836
- US-A1- 2014 150 421

## Description

### Technical Field

The present invention relates to a pressure booster for increasing the pressure of pressurized fluid and outputting the pressurized fluid.

### Background Art

Conventionally, there has been known a pressure booster that consecutively increases the pressure of pressurized fluid using reciprocating motion of a piston and then outputs the pressurized fluid.

For example, a pressure booster described in Japanese Laid-Open Patent Publication No. 08-021404 includes a pair of booster cylinders disposed to face each other and an energy collector cylinder disposed between the pair of booster cylinders. The booster cylinders and the energy collector cylinder include their respective pistons directly connected to a piston rod. In the pressure booster, compressed air is supplied to a compression chamber and a working chamber of one of the booster cylinders and to a compression chamber of the other booster cylinder, whereby the air supplied to the compression chamber of the one booster cylinder is boosted in pressure and then output. Switching operation of air-supply between the booster cylinders and of flow channels connected to the collector cylinder is performed by reed switches detecting the positions of the pistons in the booster cylinders to thereby turn on and off solenoids of a switching valve accordingly.

Document EP 0 193 498 A2 discloses a positive displacement hydraulic-drive reciprocating compressor that consists of: a large-diameter cylinder including two low pressure chambers; and small-diameter cylinders being arranged on right and left sides of the large-diameter cylinder, respectively and including both a power chamber and a high pressure chamber. In the positive displacement hydraulic-drive reciprocating compressor, when hydraulic oil is supplied to the power chamber of one or another of the small-diameter cylinders, gases in the high pressure chamber of the one or another of the small cylinders and a prescribed low pressure chamber of the large-diameter cylinder are compressed and output.

### Summary of Invention

In the pressure booster described in Japanese Laid-Open Patent Publication No. 08-021404, the pair of booster cylinders are provided with the working chambers for driving the pistons and the compression chambers for compressing fluid. This may limit flexibility in design. In addition, since the reed switches and the solenoids are used to perform the switching operation, electrical means including electrical wiring is required.

The present invention has the object of providing a pressure booster including cylinders for driving pistons and for compressing pressurized fluid that are arranged separately in an organized manner, and which is capable of performing switching operations without electrical means.

A pressure booster according to the present invention, including a booster cylinder and drive cylinders disposed respectively on both sides of the booster cylinder, includes a pair of pilot valves each configured to be actuated when a piston of the corresponding drive cylinder is in abutment with the pilot valve at a moving end of the piston, and a pair of operating valves each configured to switch a state of supply of pressurized fluid from a pressurized fluid supply source, between pressure chambers of the drive cylinders, wherein when each of the pilot valves is actuated, the pressurized fluid is supplied to the pair of operating valves through the corresponding pilot valve to thereby switch the state of supply of the pressurized fluid.

Moreover, a pressure booster according to the present invention, including a booster cylinder and drive cylinders disposed respectively on both sides of the booster cylinder, includes a pair of pilot valves each configured to be actuated when a piston of the corresponding drive cylinder is in abutment with the pilot valve at a moving end of the piston, and a pair of operating valves each configured to switch a state of supply of pressurized fluid from a pressurized fluid supply source, between pressure chambers of the drive cylinders, wherein when each of the pilot valves is actuated, pressurized fluid from the booster cylinder is supplied to the pair of operating valves through the corresponding pilot valve to thereby switch the state of supply of the pressurized fluid.

According to the above-described pressure booster, it is possible to enhance flexibility in design. For example, it is possible to make the inner diameter of the cylinders for driving the pistons different from the inner diameter of the cylinder for compressing pressurized fluid. Moreover, since the pilot valves and the operating valves can be operated using mechanical means including fluid circuits, the need for electrical means including electrical wiring is eliminated.

In the above-described pressure booster, it is preferable that each of the operating valves switch between a state in which the pressurized fluid is supplied to the pressure chamber of the corresponding drive cylinder and pressurized fluid in a back pressure chamber of the corresponding drive cylinder is discharged, and a state in which part of the pressurized fluid in the pressure chamber of the corresponding drive cylinder is collected in the back pressure chamber of the corresponding drive cylinder. This makes it possible to reduce the consumption of pressurized fluid as much as possible.

In this case, it is preferable that each of the pilot valves include a push rod configured to protrude to an inside of the back pressure chamber of the corresponding drive cylinder by a biasing force of a spring and that the piston of the corresponding drive cylinder come into abutment with the push rod at the moving end. According to this, the pilot valves are actuated in a stable manner since the pilot valves are disposed in areas in which fluid pressure fluctuation is less likely to occur. In addition, when a silencer is provided in a channel through which the pressurized fluid in each of the back pressure chambers of the drive cylinders, it is possible to reduce exhaust noise generated at the operating valves and to prevent leakage, to the outside, of striking noise generated when the pistons of the drive cylinders come into abutment against the push rods of the pilot valves as much as possible.

Moreover, it is preferable that each of the push rods include a piston portion, that a space on a first side of the piston portion be exposed to an atmosphere while a space on a second side of the piston portion is connected to a pilot channel for switching the states of the pair of operating valves, and that the space on the first side of the piston portion and the space on the second side of the piston portion communicate with each other via a hole formed inside the push rod when the piston of each of the drive cylinders is not in abutment with the push rod. According to this, the pilot channel for switching the states of the operating valves can communicate with the atmosphere by using a simple structure.

Furthermore, each of the pilot valves may include a valve element with which the corresponding push rod is abuttable, and when the piston of each of the drive cylinders comes into abutment with the push rod and then brings the push rod into abutment with the valve element, the space on the second side of the piston portion may be connected to the pressurized fluid supply source or to a corresponding booster chamber of the booster cylinder and may be sealed from the hole formed inside the push rod. Moreover, each of the push rods may be slidably disposed inside a valve seat and a valve seat retainer, a first end face of the valve seat retainer may face the back pressure chamber of the corresponding drive cylinder while a second end face thereof is in abutment with the valve seat, and the space on the first side of the piston portion may include a groove formed on the second end face of the valve seat retainer.

In accordance with the pressure booster according to the present invention, flexibility in designing the cylinders for driving the pistons and the cylinder for compressing pressurized fluid can be increased, and the need for electrical means including electrical wiring for the pilot valves and the operating valves is eliminated.

### Brief Description of Drawings

FIG. 1 is a schematic perspective view of a pressure booster according to a first embodiment of the present invention;
FIG. 2 is a side view of the pressure booster in FIG. 1;
FIG. 3 is a cross-sectional view taken along line III-III in FIG. 2;
FIG. 4 is a cross-sectional view taken along line IV-IV in FIG. 2;
FIG. 5 is a cross-sectional view taken along line V-V in FIG. 2;
FIG. 6 is an overall schematic view of the pressure booster in FIG. 1 using a circuit diagram;
FIG. 7 is an enlarged view of part B in FIG. 5;
FIG. 8 is an enlarged view of the part B in FIG. 5 when a pilot valve is actuated;
FIG. 9 is a view, corresponding to FIG. 6, illustrating a state of the pressure booster after transition from the state illustrated in FIG. 6 to another state;
FIG. 10 is a view, corresponding to FIG. 6, illustrating another state of the pressure booster after transition from the state illustrated in FIG. 9 to still another state;
FIG. 11 is an overall schematic view of a pressure booster according to a second embodiment of the present invention using a circuit diagram; and
FIG. 12 is a view, corresponding to FIG. 11, illustrating a state of the pressure booster after transition from the state illustrated in FIG. 11 to another state.

### Description of Embodiments

Preferred embodiments of a pressure booster according to the present invention will be described in detail below with reference to the accompanying drawings.

### (First Embodiment)

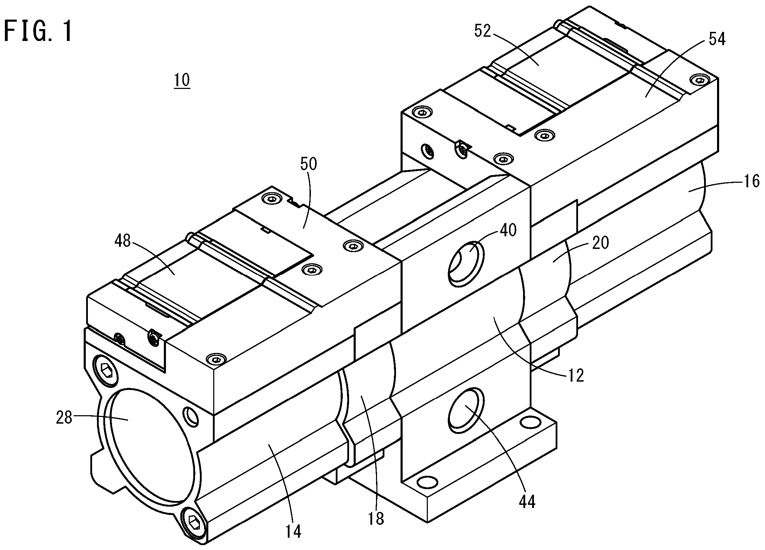

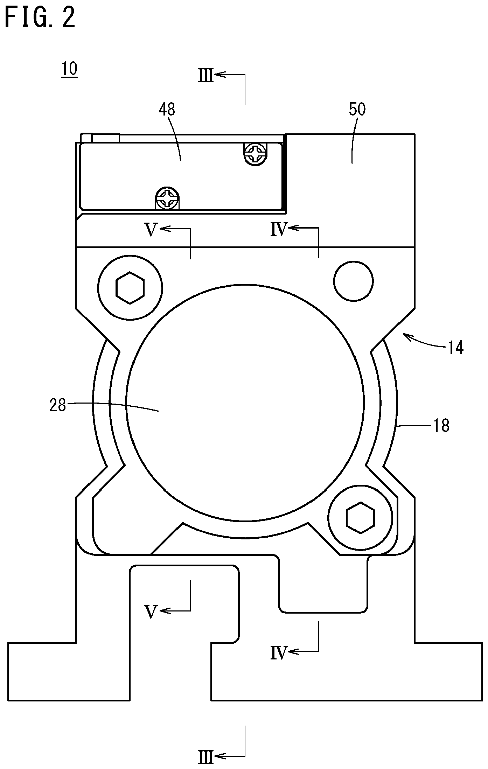

A pressure booster 10 according to a first embodiment of the present invention will now be described with reference to FIGS. 1 to 10. The pressure booster 10 is disposed between a pressurized fluid supply source (compressor; not illustrated) and an actuator (not illustrated) actuated by pressurized fluid whose pressure is boosted.

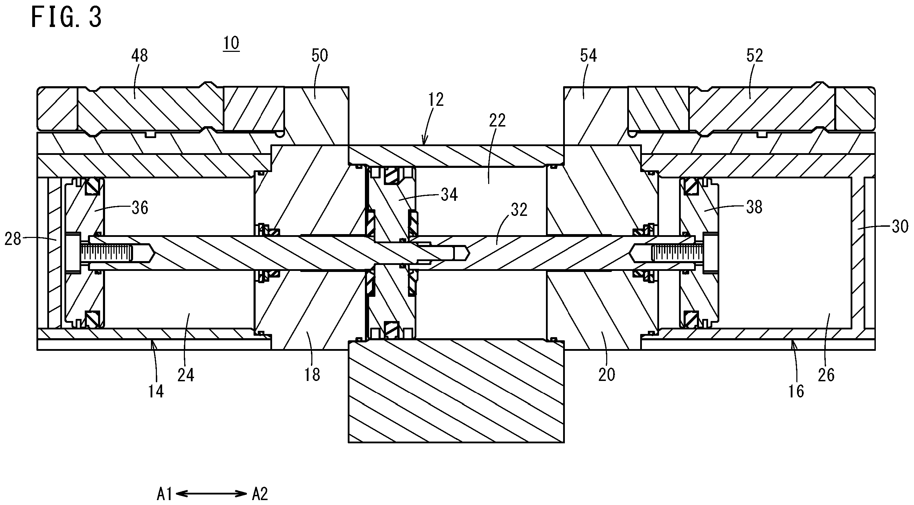

As illustrated in FIGS. 1 and 3, the pressure booster 10 has a triple cylinder structure including a booster cylinder 12, a first drive cylinder 14 disposed at a first end of the booster cylinder 12 (an end on an A1 direction side), and a second drive cylinder 16 disposed at a second end of the booster cylinder 12 (an end on an A2 direction side), which are connected in a row. That is, in the pressure booster 10, the first drive cylinder 14, the booster cylinder 12, and the second drive cylinder 16 are arranged in this order from the A1 direction to the A2 direction.

A first cover member 18 in the form of a block is interposed between the first drive cylinder 14 and the booster cylinder 12, and a second cover member 20 in the form of a block is interposed between the booster cylinder 12 and the second drive cylinder 16.

The booster cylinder 12 includes a booster chamber 22 formed thereinside. The first drive cylinder 14 and the second drive cylinder 16 respectively include a first drive chamber 24 and a second drive chamber 26 formed thereinside. In this case, the first drive chamber 24 is formed by securing a third cover member 28 to an end portion of the first drive cylinder 14 on the A1 direction side and arranging the first cover member 18 at another end portion on the A2 direction side. The second drive chamber 26 is formed by arranging the second cover member 20 at an end portion of the second drive cylinder 16 on the A1 direction side and closing another end portion on the A2 direction side with a wall portion 30.

As illustrated in FIG. 3, a piston rod 32 is arranged to pass through the first cover member 18, the booster cylinder 12, and the second cover member 20. The piston rod 32 includes two shaft members connected in series. A first end portion of the piston rod 32 extends into the first drive chamber 24, and a second end portion of the piston rod 32 extends into the second drive chamber 26.

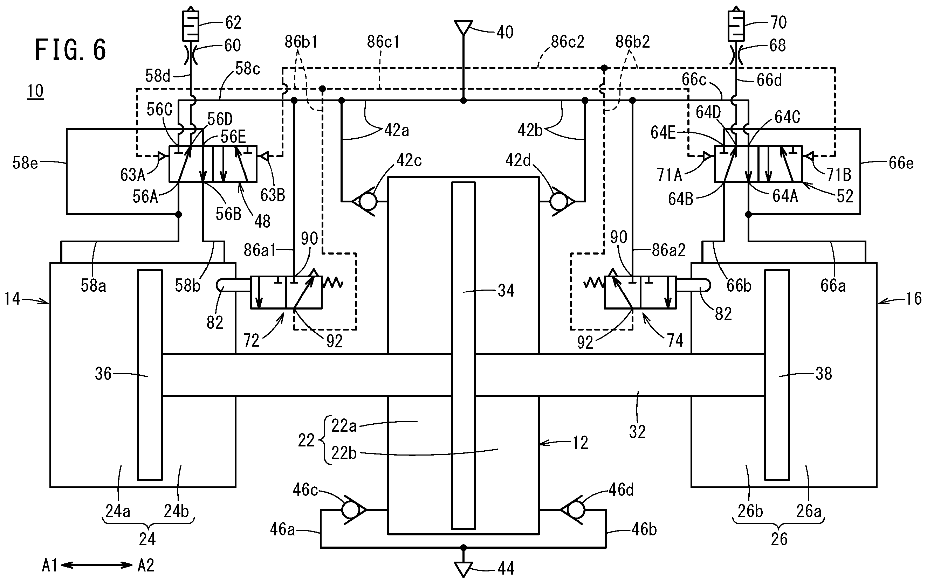

In the booster chamber 22, a booster piston 34 is connected to the midsection of the piston rod 32. Thus, the booster chamber 22 is partitioned into a first booster chamber 22a on the A1 direction side and a second booster chamber 22b on the A2 direction side (see FIG. 6). In the first drive chamber 24, a first drive piston 36 is connected to the first end portion of the piston rod 32. Thus, the first drive chamber 24 is partitioned into a pressure chamber 24a on the A1 direction side and a back pressure chamber 24b on the A2 direction side (see FIG. 6). Moreover, in the second drive chamber 26, a second drive piston 38 is connected to the second end portion of the piston rod 32. Thus, the second drive chamber 26 is partitioned into a pressure chamber 26a on the A2 direction side and a back pressure chamber 26b on the A1 direction side (see FIG. 6). The booster piston 34, the first drive piston 36, and the second drive piston 38 are connected to each other in an integrated manner via the piston rod 32.

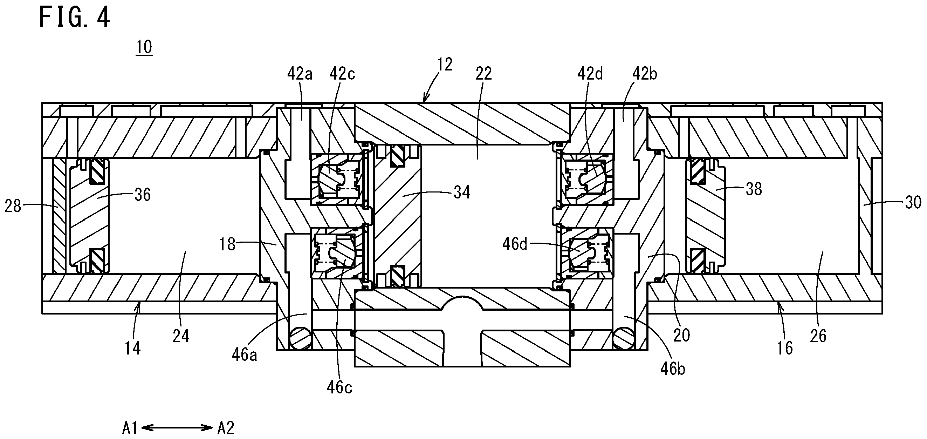

As illustrated in FIG. 1, a supply port 40, to which pressurized fluid is supplied from the pressurized fluid supply source (not illustrated), is formed in an upper portion of the front surface of the booster cylinder 12. As illustrated in FIGS. 4 and 6, a fluid supply mechanism is provided inside the booster cylinder 12, the first cover member 18, and the second cover member 20. The fluid supply mechanism communicates with the supply port 40 and delivers supplied pressurized fluid to the first booster chamber 22a and the second booster chamber 22b. The fluid supply mechanism includes a first supply channel 42a connecting the supply port 40 to the first booster chamber 22a and a second supply channel 42b connecting the supply port 40 to the second booster chamber 22b.

The first supply channel 42a is provided with a first supply check valve 42c that allows fluid to flow from the supply port 40 to the first booster chamber 22a but does not allow fluid to flow from the first booster chamber 22a to the supply port 40. The second supply channel 42b is provided with a second supply check valve 42d that allows fluid to flow from the supply port 40 to the second booster chamber 22b but does not allow fluid to flow from the second booster chamber 22b to the supply port 40.

As illustrated in FIG. 1, an output port 44 is formed in a lower portion of the front surface of the booster cylinder 12 to output fluid that has been boosted in pressure by pressure boost (described below), to the outside. As illustrated in FIGS. 4 and 6, a fluid output mechanism is provided inside the booster cylinder 12, the first cover member 18, and the second cover member 20. The fluid output mechanism communicates with the output port 44 and outputs fluid boosted in pressure in the first booster chamber 22a or the second booster chamber 22b, from the output port 44. The fluid output mechanism includes a first output channel 46a connecting the first booster chamber 22a to the output port 44 and a second output channel 46b connecting the second booster chamber 22b to the output port 44.

The first output channel 46a is provided with a first output check valve 46c that allows fluid to flow from the first booster chamber 22a to the output port 44 but does not allow fluid to flow from the output port 44 to the first booster chamber 22a. The second output channel 46b is provided with a second output check valve 46d that allows fluid to flow from the second booster chamber 22b to the output port 44 but does not allow fluid to flow from the output port 44 to the second booster chamber 22b.

Next, the configuration of operating valves will be described. As illustrated in FIG. 1, a first housing 50 including a first operating valve 48 is disposed on top of the first drive cylinder 14, and a second housing 54 including a second operating valve 52 is disposed on top of the second drive cylinder 16.

As illustrated in FIG. 6, the first operating valve 48 has a first port 56A to a fifth port 56E and is configured to switch between a first position where the first drive piston 36 is driven and a second position where the first drive piston 36 follows the movement of the second drive piston 38 as the second drive piston 38 is driven.

The first port 56A is connected to the pressure chamber 24a of the first drive cylinder 14 via a channel 58a. The second port 56B is connected to the back pressure chamber 24b of the first drive cylinder 14 via a channel 58b. The third port 56C is connected to the first supply channel 42a via a channel 58c. The fourth port 56D is connected to a first silencer 62 equipped with an exhaust port, via a channel 58d. The fifth port 56E is connected to a midway point of the channel 58a via a channel 58e. A first fixed orifice 60 is disposed on the channel 58d.

When the first operating valve 48 is in the first position, the first port 56A is connected to the third port 56C, and the second port 56B is connected to the fourth port 56D. As a result, pressurized fluid from the supply port 40 is supplied to the pressure chamber 24a through the channel 58c and the channel 58a, and fluid in the back pressure chamber 24b is discharged via the first fixed orifice 60 and the first silencer 62 through the channel 58b and the channel 58d. When the first operating valve 48 is in the second position, the first port 56A is connected to the fourth port 56D, and the second port 56B is connected to the fifth port 56E. As a result, part of the fluid in the pressure chamber 24a is collected in the back pressure chamber 24b through the channel 58a, the channel 58e, and the channel 58b, and the rest is discharged via the first fixed orifice 60 and the first silencer 62 through the channel 58d.

The first operating valve 48 has a first introduction port 63A through which pressurized fluid is introduced from a first pilot valve 72 (described below) and a second introduction port 63B through which pressurized fluid is introduced from a second pilot valve 74 (described below). The first operating valve 48 switches from the first position to the second position when pressurized fluid is supplied to the first introduction port 63A, and remains in the second position until pressurized fluid is supplied to the second introduction port 63B subsequently. The first operating valve 48 switches from the second position to the first position when pressurized fluid is supplied to the second introduction port 63B, and remains in the first position until pressurized fluid is supplied to the first introduction port 63A subsequently.

The second operating valve 52 has a first port 64A to a fifth port 64E and is configured to switch between a first position where the second drive piston 38 is driven and a second position where the second drive piston 38 follows the movement of the first drive piston 36 as the first drive piston 36 is driven.

The first port 64A is connected to the pressure chamber 26a of the second drive cylinder 16 via a channel 66a. The second port 64B is connected to the back pressure chamber 26b of the second drive cylinder 16 via a channel 66b. The third port 64C is connected to the second supply channel 42b via a channel 66c. The fourth port 64D is connected to a second silencer 70 equipped with an exhaust port, via a channel 66d. The fifth port 64E is connected to a midway point of the channel 66a via a channel 66e. A second fixed orifice 68 is disposed on the channel 66d.

When the second operating valve 52 is in the first position, the first port 64A is connected to the third port 64C, and the second port 64B is connected to the fourth port 64D. As a result, pressurized fluid from the supply port 40 is supplied to the pressure chamber 26a through the channel 66c and the channel 66a, and fluid in the back pressure chamber 26b is discharged via the second fixed orifice 68 and the second silencer 70 through the channel 66b and the channel 66d. When the second operating valve 52 is in the second position, the first port 64A is connected to the fourth port 64D, and the second port 64B is connected to the fifth port 64E. As a result, part of the fluid in the pressure chamber 26a is collected in the back pressure chamber 26b through the channel 66a, the channel 66e, and the channel 66b, and the rest is discharged via the second fixed orifice 68 and the second silencer 70 through the channel 66d.

The second operating valve 52 has a first introduction port 71A through which pressurized fluid is introduced from the first pilot valve 72 (described below) and a second introduction port 71B through which pressurized fluid is introduced from the second pilot valve 74 (described below). The second operating valve 52 switches from the second position to the first position when pressurized fluid is supplied to the first introduction port 71A, and remains in the first position until pressurized fluid is supplied to the second introduction port 71B subsequently. The second operating valve 52 switches from the first position to the second position when pressurized fluid is supplied to the second introduction port 71B, and remains in the second position until pressurized fluid is supplied to the first introduction port 71A subsequently.

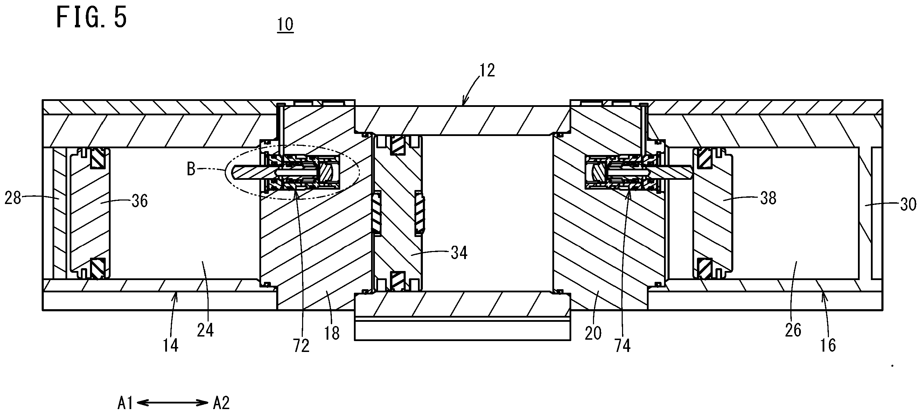

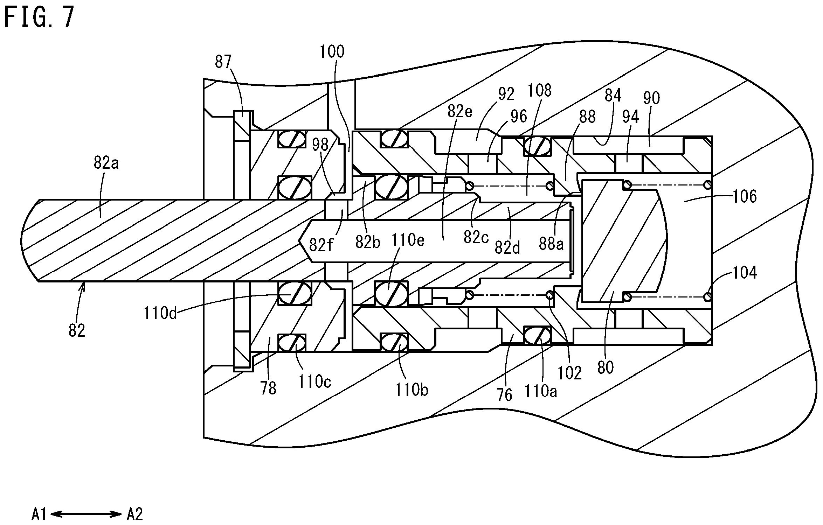

Next, the configuration of the pilot valves will be described. As illustrated in FIG. 5, the first pilot valve 72 is disposed inside the first cover member 18, and the second pilot valve 74 is disposed inside the second cover member 20. The first pilot valve 72 and the second pilot valve 74 have a common structure. Thus, the structure of the pilot valves will be described first in a collective manner with reference to FIG. 7.

The first pilot valve 72 and the second pilot valve 74 each include a valve seat 76, a valve seat retainer 78, a valve element 80, and a push rod 82. The first cover member 18 and the second cover member 20 each has a valve accommodating hole 84 which is closed on a side adjacent to the booster cylinder 12 and opened on the opposite side.

The valve seat 76 and the valve seat retainer 78, both having a cylindrical shape, are fitted into the valve accommodating hole 84. A first end face of the valve seat retainer 78 in the axial direction faces the back pressure chamber 24b of the first drive cylinder 14 or the back pressure chamber 26b of the second drive cylinder 16, and a second end face in the axial direction is in abutment against the valve seat 76. A snap ring 87 is secured to the opening of the valve accommodating hole 84 via a groove, and the snap ring 87 is in abutment against the valve seat retainer 78. Thus, the valve seat 76 and the valve seat retainer 78 are positioned and secured in the axial direction.

The inner circumference of the valve seat retainer 78 has an increased diameter on the second end side in the axial direction, whereby an annular recess 98 is formed. The valve seat retainer 78 has a plurality of grooves 100 extending radially, which are formed in the second end face in the axial direction. The grooves 100 communicate with the annular recess 98 on the inner circumference and communicate with the atmosphere on the outer circumference via paths (not illustrated). The inner diameter of the valve seat retainer 78 at the annular recess 98 is smaller than the inner diameter of a portion of the valve seat 76 that lies adjacent to the valve seat retainer 78. That is, the end face of the valve seat retainer 78 in abutment against the valve seat 76 protrudes inward more than the valve seat 76.

An annular flange portion 88 protruding inward is provided on the inner circumference of the valve seat 76. In addition, an annular protrusion 88a protruding toward the bottom of the valve accommodating hole 84 is formed on the end of the annular flange portion 88. A first annular recess 90 and a second annular recess 92 are formed in the outer circumference of the valve seat 76. The valve seat 76 has a plurality of first through-holes 94, extending from the bottom of the first annular recess 90 to the inner circumference of the valve seat 76, in a region closer to the bottom of the valve accommodating hole 84 than the annular flange portion 88 is. The valve seat 76 has a plurality of second through-holes 96, extending from the bottom of the second annular recess 92 to the inner circumference of the valve seat 76, in a region closer to the opening of the valve accommodating hole 84 than the annular flange portion 88 is.

The push rod 82 is slidably disposed inside the valve seat 76 and the valve seat retainer 78. The push rod 82 includes a head portion 82a at a first end thereof in the axial direction and a piston portion 82b in the middle in the axial direction. The head portion 82a is in sliding contact with the inner circumferential surface of the valve seat retainer 78, and the piston portion 82b is in sliding contact with the inner circumferential surface of the valve seat 76. The push rod 82 includes a reduced-diameter portion 82d formed at a second end in the axial direction via a stepped portion 82c. The end of the reduced-diameter portion 82d can be brought into abutment against the valve element 80. A central hole 82e and a plurality of radially-extending holes 82f are formed inside the push rod 82. The central hole 82e passes through the reduced-diameter portion 82d in the axial direction and further extends in the axial direction to reach the head portion 82a. The radially-extending holes 82f are orthogonal to the central hole 82e and are opened in the outer circumferential surface of the head portion 82a.

A first spring 102 is provided between the annular flange portion 88 of the valve seat 76 and the piston portion 82b of the push rod 82. The push rod 82 is biased in a direction away from the booster cylinder 12 by the biasing force of the first spring 102, and part of the head portion 82a protrudes to the inside of the back pressure chamber 24b of the first drive cylinder 14 or to the inside of the back pressure chamber 26b of the second drive cylinder 16. The end face of the piston portion 82b comes into abutment with the end face of the valve seat retainer 78 to thereby restrict the movement of the push rod 82 in the direction away from the booster cylinder 12.

The cylindrical valve element 80 is disposed inside the valve seat 76 in a position closer to the bottom of the valve accommodating hole 84 than the annular flange portion 88 is. A second spring 104 is provided between the bottom of the valve accommodating hole 84 and the valve element 80. The valve element 80 is biased toward the annular flange portion 88 of the valve seat 76 by the biasing force of the second spring 104.

A first seal member 110a and a second seal member 110b are provided on the outer circumference of the valve seat 76 via grooves. The first seal member 110a and the second seal member 110b are in pressure contact with the inner wall of the valve accommodating hole 84. A third seal member 110c is provided on the outer circumference of the valve seat retainer 78 via a groove. The third seal member 110c is in pressure contact with the inner wall of the valve accommodating hole 84. A fourth seal member 110d is provided on the inner circumference of the valve seat retainer 78 via a groove. The fourth seal member 110d is in sliding contact with the outer circumferential surface of the head portion 82a of the push rod 82. A fifth seal member 110e is provided on the piston portion 82b of the push rod 82 via a groove. The fifth seal member 110e is in sliding contact with the inner circumferential surface of the valve seat 76.

The first pilot valve 72 and the second pilot valve 74 are configured as above. Next, the first pilot valve 72 and the second pilot valve 74 will be described with reference to FIGS. 6 to 8, in relation to the surrounding channels.

A channel 86a1 is formed inside the first cover member 18. A first end of the channel 86a1 communicates with the first annular recess 90 of the valve seat 76 in the first pilot valve 72, and a second end thereof is connected to the first supply channel 42a. A pilot channel 86b1 is formed inside the first cover member 18 and the first housing 50. A first end of the pilot channel 86b1 communicates with the second annular recess 92 of the valve seat 76 in the first pilot valve 72, and a second end thereof extends to the first introduction port 63A of the first operating valve 48. A pilot channel 86c1 is formed inside the first cover member 18, the booster cylinder 12, and the second housing 54. The pilot channel 86c1 branches off from the pilot channel 86b1 and extends to the first introduction port 71A of the second operating valve 52.

As illustrated in FIG. 7, in the first pilot valve 72, the space inside the valve seat 76 is hermetically partitioned into a first area 106 communicating with the first through-holes 94 and a second area 108 communicating with the second through-holes 96 when the reduced-diameter portion 82d of the push rod 82 is not in abutment with the valve element 80, i.e., when the valve element 80 is in pressure contact with the annular protrusion 88a of the annular flange portion 88 by the biasing force of the second spring 104. In addition, the second area 108 communicates with the central hole 82e of the push rod 82. The second area 108 communicates with the pilot channel 86b1 via the second through-holes 96 and the second annular recess 92 of the valve seat 76, and the central hole 82e of the push rod 82 is exposed to the atmosphere via the radially-extending holes 82f and the annular recess 98 and the grooves 100 of the valve seat retainer 78. Consequently, the pilot channel 86b1 is exposed to the atmosphere under normal conditions.

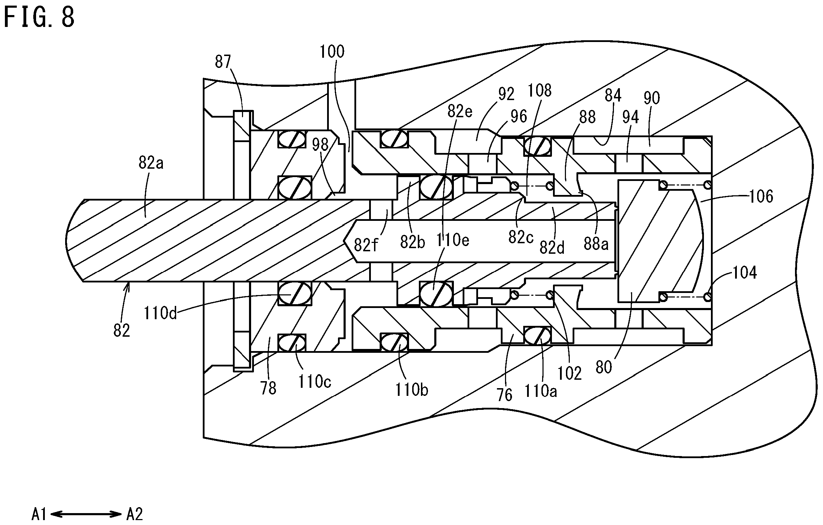

On the other hand, as illustrated in FIG. 8, in the first pilot valve 72, the first through-holes 94 and the second through-holes 96 of the valve seat 76 communicate with each other via the space inside the valve seat 76 in a state that the valve element 80 is pushed by the end of the reduced-diameter portion 82d of the push rod 82 to be separated from the annular protrusion 88a of the annular flange portion 88 (i.e., in a state that the pilot valve is actuated). In addition, when the reduced-diameter portion 82d of the push rod 82 is in pressure contact with the end face of the valve element 80, the central hole 82e of the push rod 82 is sealed from the space inside the valve seat 76. Thus, the pilot channel 86b1 communicating with the second through-holes 96 via the second annular recess 92 is connected to the channel 86a1 communicating with the first through-holes 94 via the first annular recess 90. Consequently, in the above-described state, the pilot channel 86b1 is connected to the supply port 40 via the channel 86a1.

A channel 86a2 is formed inside the second cover member 20. A first end of the channel 86a2 communicates with the first annular recess 90 of the valve seat 76 in the second pilot valve 74, and a second end thereof is connected to the second supply channel 42b. A pilot channel 86b2 is formed inside the second cover member 20 and the second housing 54. A first end of the pilot channel 86b2 communicates with the second annular recess 92 of the valve seat 76 in the second pilot valve 74, and a second end thereof extends to the second introduction port 71B of the second operating valve 52. A pilot channel 86c2 is formed inside the second cover member 20, the booster cylinder 12, and the first housing 50. The pilot channel 86c2 branches off from the pilot channel 86b2 and extends to the second introduction port 63B of the first operating valve 48.

As illustrated in FIG. 7, in the second pilot valve 74, the space inside the valve seat 76 is hermetically partitioned into the first area 106 communicating with the first through-holes 94 and the second area 108 communicating with the second through-holes 96 when the valve element 80 is in pressure contact with the annular protrusion 88a of the annular flange portion 88 by the biasing force of the second spring 104 as the reduced-diameter portion 82d of the push rod 82 is not in abutment with the valve element 80. In addition, the second area 108 communicates with the central hole 82e of the push rod 82. The second area 108 communicates with the pilot channel 86b2 via the second through-holes 96 and the second annular recess 92 of the valve seat 76, and the central hole 82e of the push rod 82 is exposed to the atmosphere via the radially-extending holes 82f and the annular recess 98 and the grooves 100 of the valve seat retainer 78. Consequently, the pilot channel 86b2 is exposed to the atmosphere under normal conditions.

On the other hand, as illustrated in FIG. 8, in the second pilot valve 74, the first through-holes 94 and the second through-holes 96 of the valve seat 76 communicate with each other via the space inside the valve seat 76 in a state that the valve element 80 is pushed by the end of the reduced-diameter portion 82d of the push rod 82 to be separated from the annular protrusion 88a of the annular flange portion 88 (i.e., in a state that the pilot valve is actuated). In addition, when the reduced-diameter portion 82d of the push rod 82 is in pressure contact with the end face of the valve element 80, the central hole 82e of the push rod 82 is sealed from the space inside the valve seat 76. Thus, the pilot channel 86b2 communicating with the second through-holes 96 via the second annular recess 92 is connected to the channel 86a2 communicating with the first through-holes 94 via the first annular recess 90. Consequently, in the above-described state, the pilot channel 86b2 is connected to the supply port 40 via the channel 86a2.

The pressure booster 10 according to the first embodiment is basically configured as above. Next, the operations and operational effects thereof will be described. A state in which the first operating valve 48 is switched to the second position, the second operating valve 52 is switched to the first position, and the booster piston 34 is located adjacent to the middle of the booster chamber 22 as illustrated in FIG. 6 is defined as an initial position.

In the initial position, when pressurized fluid is supplied from the pressurized fluid supply source to the supply port 40, the pressurized fluid flows into the first supply channel 42a and the second supply channel 42b. The pressurized fluid is then introduced to the first booster chamber 22a and the second booster chamber 22b of the booster cylinder 12 via the first supply check valve 42c and the second supply check valve 42d, respectively.

Part of the pressurized fluid supplied from the supply port 40 is supplied to the pressure chamber 26a of the second drive cylinder 16 through the channel 66c, the second operating valve 52 in the first position, and the channel 66a. The pressurized fluid supplied to the pressure chamber 26a drives the second drive piston 38 in the A1 direction. This causes the booster piston 34 connected to the second drive piston 38 in an integrated manner to slide, resulting in an increase in the pressure of the pressurized fluid in the first booster chamber 22a of the booster cylinder 12. The boosted pressurized fluid is guided to and output from the output port 44 through the first output channel 46a and the first output check valve 46c.

On the other hand, when the first drive piston 36 connected to the second drive piston 38 in an integrated manner slides, the volume of the pressure chamber 24a of the first drive cylinder 14 decreases. Since the first operating valve 48 is in the second position, part of the pressurized fluid in the pressure chamber 24a is collected in the back pressure chamber 24b through the channel 58a, the channel 58e, and the channel 58b, and the rest is discharged through the channel 58d.

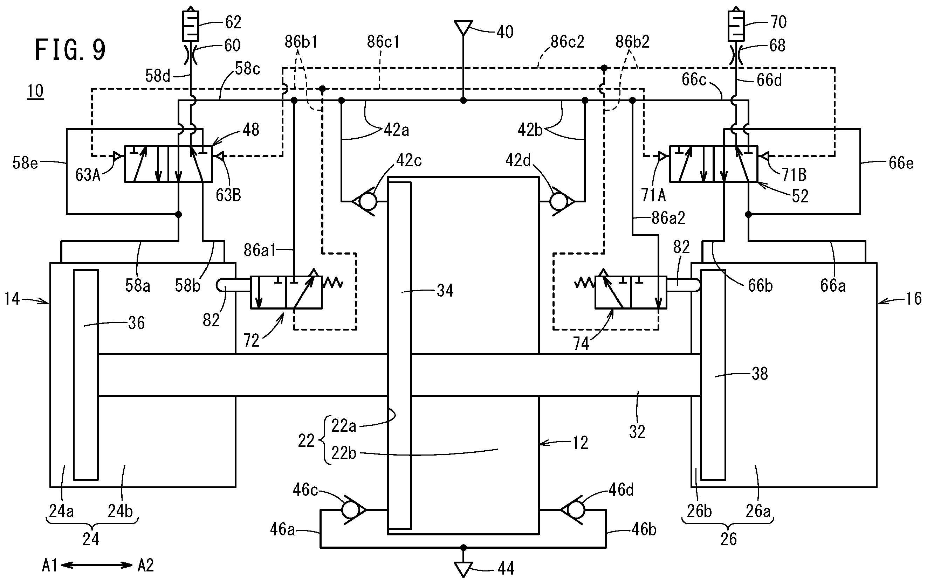

As illustrated in FIG. 9, when the booster piston 34 is further displaced in the A1 direction to reach an end position, the second drive piston 38 comes into abutment with the head portion 82a of the push rod 82 in the second pilot valve 74 and causes the push rod 82 to be displaced. As a result, pressurized fluid supplied from the supply port 40 is supplied to the second introduction port 71B of the second operating valve 52 through the channel 86a2, the second pilot valve 74, and the pilot channel 86b2, and to the second introduction port 63B of the first operating valve 48 through the pilot channel 86c2. At this time, since the pilot channel 86b1 of the first pilot valve 72 is exposed to the atmosphere, the pressurized fluid supplied to the first introduction port 71A of the second operating valve 52 is discharged to the atmosphere through the pilot channel 86c1 and the pilot channel 86b1, and the pressurized fluid supplied to the first introduction port 63A of the first operating valve 48 is discharged to the atmosphere through the pilot channel 86b1. Consequently, the first operating valve 48 is switched to the first position, and the second operating valve 52 is switched to the second position.

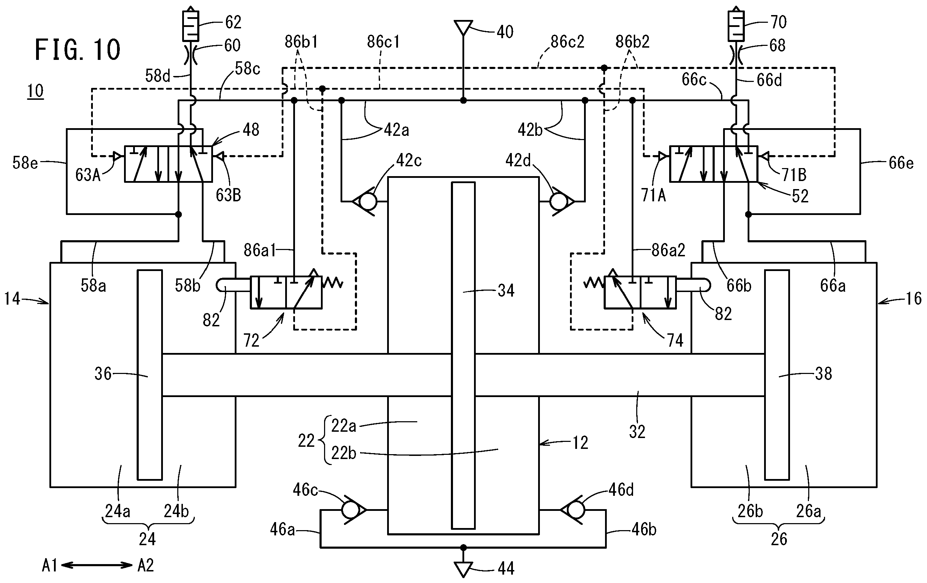

Then, part of the pressurized fluid supplied from the supply port 40 is supplied to the pressure chamber 24a of the first drive cylinder 14 through the channel 58c, the first operating valve 48 in the first position, and the channel 58a. As illustrated in FIG. 10, the pressurized fluid supplied to the pressure chamber 24a drives the first drive piston 36 in the A2 direction. This causes the booster piston 34 connected to the first drive piston 36 in an integrated manner to slide, resulting in an increase in the pressure of the pressurized fluid in the second booster chamber 22b of the booster cylinder 12. The boosted pressurized fluid is guided to and output from the output port 44 through the second output channel 46b and the second output check valve 46d.

On the other hand, when the second drive piston 38 connected to the first drive piston 36 in an integrated manner slides, the volume of the pressure chamber 26a of the second drive cylinder 16 decreases. Since the second operating valve 52 is in the second position, part of the pressurized fluid in the pressure chamber 26a is collected in the back pressure chamber 26b through the channel 66a, the channel 66e, and the channel 66b, and the rest is discharged through the channel 66d.

When the piston rod 32 is further displaced in the A2 direction to reach an end position, the first drive piston 36 comes into abutment with the head portion 82a of the push rod 82 in the first pilot valve 72 and causes the push rod 82 to be displaced (not illustrated). As a result, pressurized fluid supplied from the supply port 40 is supplied to the first introduction port 63A of the first operating valve 48 through the channel 86a1, the first pilot valve 72, and the pilot channel 86b1, and to the first introduction port 71A of the second operating valve 52 through the pilot channel 86c1. At this time, since the pilot channel 86b2 of the second pilot valve 74 is exposed to the atmosphere, the pressurized fluid supplied to the second introduction port 63B of the first operating valve 48 is discharged to the atmosphere through the pilot channel 86c2 and the pilot channel 86b2, and the pressurized fluid supplied to the second introduction port 71B of the second operating valve 52 is discharged to the atmosphere through the pilot channel 86b2. Consequently, the first operating valve 48 is switched to the second position, and the second operating valve 52 is switched to the first position. The booster piston 34 repeats the reciprocating motion in the above manner to consecutively output boosted pressurized fluid from the output port 44.

The pressure booster 10 according to this embodiment performs switching of the first operating valve 48 and the second operating valve 52 and actuation of the first pilot valve 72 and the second pilot valve 74 using mechanical means including fluid circuits without the need for electrical means.

Moreover, part of the pressurized fluid that has been supplied to the pressure chamber 24a to drive the first drive piston 36 is collected in the back pressure chamber 24b when the first drive piston 36 is driven by the movement of the second drive piston 38 as the second drive piston 38 is driven. This makes it possible to reduce the consumption of pressurized fluid. Similarly, part of the pressurized fluid that has been supplied to the pressure chamber 26a to drive the second drive piston 38 is collected in the back pressure chamber 26b when the second drive piston 38 is driven by the movement of the first drive piston 36 as the first drive piston 36 is driven. This also makes it possible to reduce the consumption of pressurized fluid.

Furthermore, the push rods 82 face the back pressure chamber 24b of the first drive cylinder 14 and the back pressure chamber 26b of the second drive cylinder 16 respectively. Since fluid pressure fluctuation is less likely to occur in the back pressure chambers, the first pilot valve 72 and the second pilot valve 74 can be operated stably.

Not according to the invention, the first pilot valve 72 and the second pilot valve 74 may be disposed to face respectively the second booster chamber 22b and the first booster chamber 22a of the booster cylinder 12. In this case, care must be given so that an increase in the fluid pressure in the first booster chamber 22a or the second booster chamber 22b may adversely affect the operation of the push rods 82.

Yet moreover, the first silencer 62 is provided in the channel 58d through which pressurized fluid in the back pressure chamber 24b of the first drive cylinder 14 is discharged. This reduces exhaust noise generated at the first operating valve 48 and prevents leakage of striking noise generated when the first drive piston 36 comes into abutment against the push rod 82 of the first pilot valve 72, to the outside. Similarly, the second silencer 70 is provided in the channel 66d discharging pressurized fluid in the back pressure chamber 26b of the second drive cylinder 16. This reduces exhaust noise generated at the second operating valve 52 and prevents leakage of striking noise generated when the second drive piston 38 comes into abutment against the push rod 82 of the second pilot valve 74, to the outside.

### (Second Embodiment)

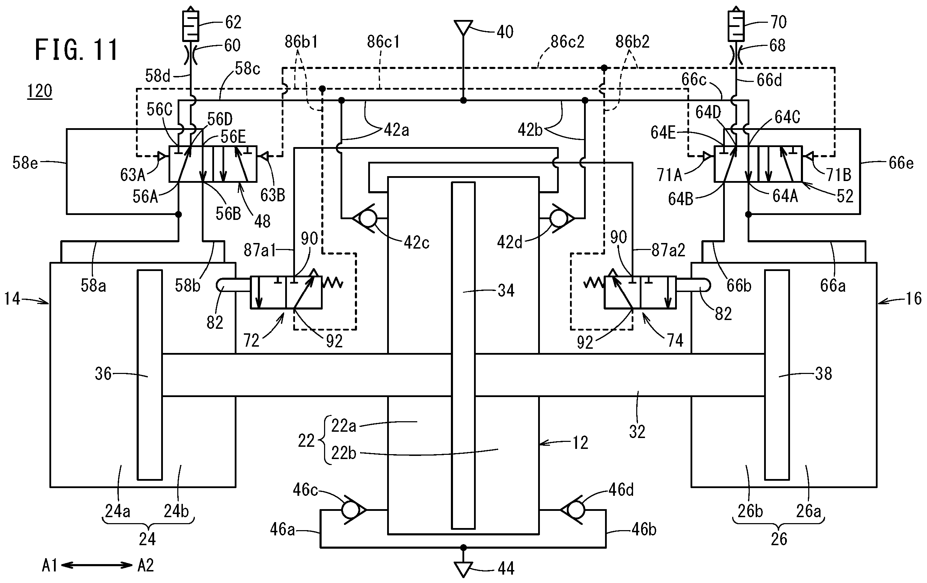

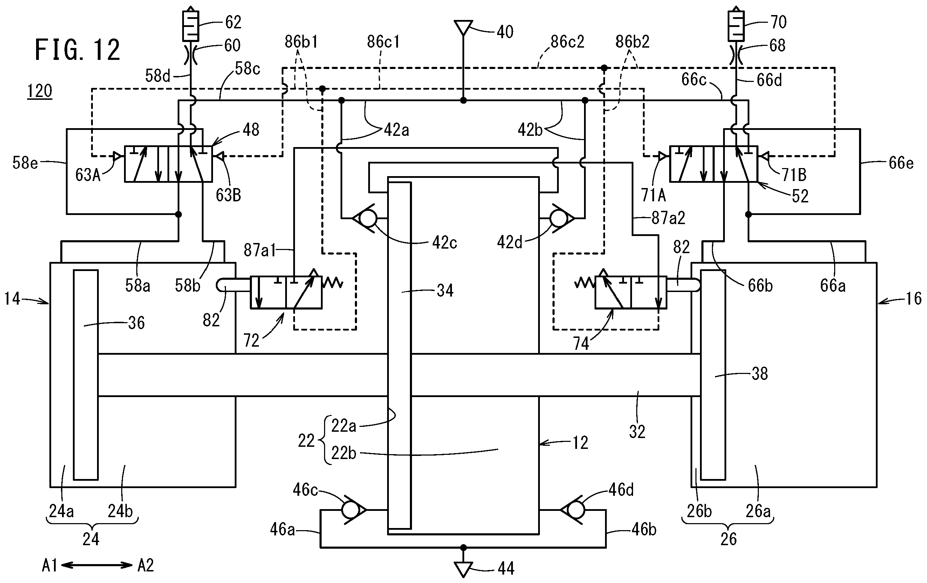

Next, a pressure booster 120 according to a second embodiment of the present invention will be described with reference to FIGS. 11 and 12. The second embodiment differs from the first embodiment in the sources and paths of pressurized fluid supplied to the first annular recesses 90 of the pilot valves. In the pressure booster 120 according to the second embodiment, the same reference numerals and symbols are used for components identical to those in the pressure booster 10 described above, and the detailed descriptions will be omitted.

A channel 87a1 is formed inside the first cover member 18 and the booster cylinder 12. A first end of the channel 87a1 communicates with the first annular recess 90 of the valve seat 76 in the first pilot valve 72, and a second end thereof is connected to the second booster chamber 22b. The pilot channel 86b1 is formed inside the first cover member 18 and the first housing 50. The first end of the pilot channel 86b1 communicates with the second annular recess 92 of the valve seat 76 in the first pilot valve 72, and the second end extends to the first introduction port 63A of the first operating valve 48. The pilot channel 86c1 is formed inside the first cover member 18, the booster cylinder 12, and the second housing 54. The pilot channel 86c1 branches off from the pilot channel 86b1 and extends to the first introduction port 71A of the second operating valve 52.

While the first pilot valve 72 is not actuated (see FIG. 7), the pilot channel 86b1 is exposed to the atmosphere. On the other hand, while the first pilot valve 72 is actuated (see FIG. 8), the pilot channel 86b1 is connected to the second booster chamber 22b via the channel 87a1.

A channel 87a2 is formed inside the second cover member 20 and the booster cylinder 12. A first end of the channel 87a2 communicates with the first annular recess 90 of the valve seat 76 in the second pilot valve 74, and a second end thereof is connected to the first booster chamber 22a. The pilot channel 86b2 is formed inside the second cover member 20 and the second housing 54. The first end of the pilot channel 86b2 communicates with the second annular recess 92 of the valve seat 76 in the second pilot valve 74, and the second end extends to the second introduction port 71B of the second operating valve 52. The pilot channel 86c2 is formed inside the second cover member 20, the booster cylinder 12, and the first housing 50. The pilot channel 86c2 branches off from the pilot channel 86b2 and extends to the second introduction port 63B of the first operating valve 48.

While the second pilot valve 74 is not actuated (see FIG. 7), the pilot channel 86b2 is exposed to the atmosphere. On the other hand, while the second pilot valve 74 is actuated (see FIG. 8), the pilot channel 86b2 is connected to the first booster chamber 22a via the channel 87a2.

Next, the operation of the pressure booster 120 according to the second embodiment will be described, focusing on the operation of the first pilot valve 72 and the second pilot valve 74. A state in which the first operating valve 48 is switched to the second position, the second operating valve 52 is switched to the first position, and the booster piston 34 is located adjacent to the middle of the booster chamber 22 as illustrated in FIG. 11 is defined as an initial position.

In the initial position, when pressurized fluid is supplied from the pressurized fluid supply source to the supply port 40, the pressurized fluid is supplied to the pressure chamber 26a of the second drive cylinder 16, and the second drive piston 38 is driven in the A1 direction. This causes the booster piston 34 connected to the second drive piston 38 in an integrated manner to slide, resulting in an increase in the pressure of the pressurized fluid in the first booster chamber 22a of the booster cylinder 12. The boosted pressurized fluid in the first booster chamber 22a is guided to and output from the output port 44. On the other hand, part of the fluid in the pressure chamber 24a of the first drive cylinder 14 is collected in the back pressure chamber 24b, and the rest is discharged. The boosted pressurized fluid in the first booster chamber 22a is also introduced to the first annular recess 90 of the second pilot valve 74. Since the second pilot valve 74 is not actuated at this moment, the pressurized fluid introduced to the first annular recess 90 remains as it is.

As illustrated in FIG. 12, when the booster piston 34 is further displaced in the A1 direction to reach the end position, the second drive piston 38 comes into abutment with the head portion 82a of the push rod 82 in the second pilot valve 74 and causes the push rod 82 to be displaced. As a result, the boosted pressurized fluid in the first booster chamber 22a is supplied to the second introduction port 71B of the second operating valve 52 through the channel 87a2, the second pilot valve 74, and the pilot channel 86b2, and to the second introduction port 63B of the first operating valve 48 through the pilot channel 86c2. Consequently, the first operating valve 48 is switched to the first position, and the second operating valve 52 is switched to the second position.

Then, pressurized fluid supplied from the supply port 40 is supplied to the pressure chamber 24a of the first drive cylinder 14, and the first drive piston 36 is driven in the A2 direction. This causes the booster piston 34 connected to the first drive piston 36 in an integrated manner to slide, resulting in an increase in the pressure of the pressurized fluid in the second booster chamber 22b of the booster cylinder 12. The boosted pressurized fluid is guided to and output from the output port 44. On the other hand, part of the fluid in the pressure chamber 26a of the second drive cylinder 16 is collected in the back pressure chamber 26b, and the rest is discharged. The boosted pressurized fluid in the second booster chamber 22b is also introduced to the first annular recess 90 of the first pilot valve 72. Since the first pilot valve 72 is not actuated at this moment, the pressurized fluid introduced to the first annular recess 90 remains as it is.

When the piston rod 32 is further displaced in the A2 direction to reach the end position, the first drive piston 36 comes into abutment with the head portion 82a of the push rod 82 in the first pilot valve 72 and causes the push rod 82 to be displaced (not illustrated). As a result, the boosted pressurized fluid in the second booster chamber 22b is supplied to the first introduction port 63A of the first operating valve 48 through the channel 87a1, the first pilot valve 72, and the pilot channel 86b1, and to the first introduction port 71A of the second operating valve 52 through the pilot channel 86c1. Consequently, the first operating valve 48 is switched to the second position, and the second operating valve 52 is switched to the first position. The booster piston 34 repeats the reciprocating motion in the above manner to consecutively output boosted pressurized fluid from the output port 44.

In accordance with the pressure booster 120 according to this embodiment, pressurized fluid is extracted from the first booster chamber 22a or the second booster chamber 22b of the booster cylinder 12 and supplied to predetermined ports of the first operating valve 48 and the second operating valve 52 in order to switch the positions of the operating valves. Since the pressure of pressurized fluid increased in the first booster chamber 22a or the second booster chamber 22b is higher than the pressure of the pressurized fluid supply source, the first operating valve 48 and the second operating valve 52 can be actuated more reliably.

The pressure booster according to the present invention is not limited in particular to the embodiments described above, and may have various structures without departing from the scope of the present invention as defined by the appended claims.

## Claims

1. A pressure booster (10, 120) including a booster cylinder (12) and drive cylinders (14, 16) disposed respectively on both sides of the booster cylinder, **characterized by**:
a pair of pilot valves (72, 74) each configured to be actuated when a piston (36, 38) of the corresponding drive cylinder (14, 16) is in abutment with the pilot valve (72, 74) at a moving end of the piston; and
a pair of operating valves (48, 52) each configured to switch a state of supply of pressurized fluid from a pressurized fluid supply source, between pressure chambers (24a, 26a) of the drive cylinders (14, 16), wherein:
when each of the pilot valves (72, 74) is actuated, the pressurized fluid is supplied to the pair of operating valves (48, 52) through the corresponding pilot valve (72, 74) to thereby switch the state of supply of the pressurized fluid.

2. The pressure booster according to claim 1, wherein each of the operating valves (48, 52) switches between a state in which the pressurized fluid is supplied to the pressure chamber (24a, 26a) of the corresponding drive cylinder (14, 16) and pressurized fluid in a back pressure chamber (24b, 26b) of the corresponding drive cylinder (14, 16) is discharged, and a state in which part of the pressurized fluid in the pressure chamber (24a, 26a) of the corresponding drive cylinder (14, 16) is collected in the back pressure chamber (24b, 26b) of the corresponding drive cylinder (14, 16).

3. The pressure booster according to claim 2, wherein:
each of the pilot valves (72, 74) includes a push rod (82) configured to protrude to an inside of the back pressure chamber (24b, 26b) of the corresponding drive cylinder (14, 16) by a biasing force of a spring (102); and
the piston (36, 38) of the corresponding drive cylinder (14, 16) comes into abutment with the push rod (82) at the moving end.

4. The pressure booster according to claim 3, wherein a silencer (62, 70) is provided in a channel through which the pressurized fluid in each of the back pressure chambers (24b, 26b) of the drive cylinders (14, 16) is discharged.

5. The pressure booster according to claim 3, wherein:
each of the push rods (82) includes a piston portion (82b);
a space on a first side of the piston portion (82b) is exposed to an atmosphere while a space on a second side of the piston portion (82b) is connected to a pilot channel (86b1, 86b2, 86c1, 86c2) for switching the states of the pair of operating valves (48, 52); and
when the piston (36, 38) of each of the drive cylinders (14, 16) is not in abutment with the push rod (82), the space on the first side of the piston portion (82b) and the space on the second side of the piston portion (82b) communicate with each other via a hole (82e) formed inside the push rod (82).

6. The pressure booster according to claim 5, wherein:
each of the pilot valves (72, 74) includes a valve element (80) with which the corresponding push rod (82) is abuttable; and
when the piston (36, 38) of each of the drive cylinders (14, 16) comes into abutment with the push rod (82) and then brings the push rod (82) into abutment with the valve element (80), the space on the second side of the piston portion (82b) is connected to the pressurized fluid supply source and is sealed from the hole (82e) formed inside the push rod (82).

7. The pressure booster according to claim 5, wherein:
each of the push rods (82) is slidably disposed inside a valve seat (76) and a valve seat retainer (78);
a first end face of the valve seat retainer (78) faces the back pressure chamber (24b, 26b) of the corresponding drive cylinder (14, 16) while a second end face thereof is in abutment with the valve seat (76); and
the space on the first side of the piston portion (82b) includes a groove (100) formed on the second end face of the valve seat retainer (78).

8. A pressure booster (120) including a booster cylinder (12) and drive cylinders (14, 16) disposed respectively on both sides of the booster cylinder, **characterized by**:
a pair of pilot valves (72, 74) each configured to be actuated when a piston (36, 38) of the corresponding drive cylinder (14, 16) is in abutment with the pilot valve (72, 74) at a moving end of the piston; and
a pair of operating valves (48, 52) each configured to switch a state of supply of pressurized fluid from a pressurized fluid supply source, between pressure chambers (24a, 26a) of the drive cylinders (14, 16), wherein:
when each of the pilot valves (72, 74) is actuated, pressurized fluid from the booster cylinder (12) is supplied to the pair of operating valves (48, 52) through the corresponding pilot valve (72, 74) to thereby switch the state of supply of the pressurized fluid.

9. The pressure booster according to claim 8, wherein each of the operating valves (48, 52) switches between a state in which the pressurized fluid from the pressurized fluid supply source is supplied to the pressure chamber (24a, 26a) of the corresponding drive cylinder (14, 16) and pressurized fluid in a back pressure chamber (24b, 26b) of the corresponding drive cylinder (14, 16) is discharged, and a state in which part of the pressurized fluid in the pressure chamber (24a, 26a) of the corresponding drive cylinder (14, 16) is collected in the back pressure chamber (24b, 26b) of the corresponding drive cylinder (14, 16) .

10. The pressure booster according to claim 9, wherein:
each of the pilot valves (72, 74) includes a push rod (82) configured to protrude to an inside of the back pressure chamber (24b, 26b) of the corresponding drive cylinder (14, 16) by a biasing force of a spring (102); and
the piston (36, 38) of the corresponding drive cylinder (14, 16) comes into abutment with the push rod (82) at the moving end.

11. The pressure booster according to claim 10, wherein a silencer (62, 70) is provided in a channel through which the pressurized fluid in each of the back pressure chambers (24b, 26b) of the drive cylinders (14, 16) is discharged.

12. The pressure booster according to claim 10, wherein:
each of the push rods (82) includes a piston portion (82b);
a space on a first side of the piston portion (82b) is exposed to an atmosphere while a space on a second side of the piston portion (82b) is connected to a pilot channel (86b1, 86b2, 86c1, 86c2) for switching the states of the pair of operating valves (48, 52); and
when the piston (36, 38) of each of the drive cylinders (14, 16) is not in abutment with the push rod (82), the space on the first side of the piston portion (82b) and the space on the second side of the piston portion (82b) communicate with each other via a hole (82e) formed inside the push rod (82).

13. The pressure booster according to claim 12, wherein:
each of the pilot valves (72, 74) includes a valve element (80) with which the corresponding push rod (82) is abuttable; and
when the piston (36, 38) of each of the drive cylinders (14, 16) comes into abutment with the push rod (82) and then brings the push rod (82) into abutment with the valve element (80), the space on the second side of the piston portion (82b) is connected to a corresponding booster chamber (22a, 22b) of the booster cylinder (12) and is sealed from the hole (82e) formed inside the push rod (82).

14. The pressure booster according to claim 12, wherein:
each of the push rods (82) is slidably disposed inside a valve seat (76) and a valve seat retainer (78);
a first end face of the valve seat retainer (78) faces the back pressure chamber (24b, 26b) of the corresponding drive cylinder (14, 16) while a second end face thereof is in abutment with the valve seat (76); and
the space on the first side of the piston portion (82b) includes a groove (100) formed on the second end face of the valve seat retainer (78).

## Patentansprüche

1. Druckverstärker (10, 120) mit einem Verstärkerzylinder (12) und Antriebszylindern (14, 16), die jeweils auf beiden Seiten des Verstärkerzylinders angeordnet sind, **gekennzeichnet durch:**
ein Paar Vorsteuerventile (72, 74), die jeweils so konfiguriert sind, dass sie betätigt werden, wenn ein Kolben (36, 38) des entsprechenden Antriebszylinders (14, 16) an einem beweglichen Ende des Kolbens an das Vorsteuerventil (72, 74) anstößt; und ein Paar Betätigungsventile (48, 52), die jeweils so konfiguriert sind, dass sie einen Zustand der Zufuhr von Druckfluid aus einer Druckfluidzufuhrquelle zwischen Druckkammern (24a, 26a) der Antriebszylinder (14, 16) umschalten, wobei:
wenn jedes der Vorsteuerventile (72, 74) betätigt wird, das Druckfluid durch das entsprechende Vorsteuerventil (72, 74) dem Paar von Betriebsventilen (48, 52) zugeführt wird, um dadurch den Versorgungszustand des Druckfluids zu schalten.

2. Druckverstärker nach Anspruch 1, wobei jedes der Betriebsventile (48, 52) zwischen einem Zustand, in dem das Druckfluid der Druckkammer (24a, 26a) des entsprechenden Antriebszylinders (14, 16) zugeführt wird, und Druckfluid in einer Gegendruckkammer (24b, 26b) des entsprechenden Antriebszylinders (14, 16) abgelassen wird, und einem Zustand, in dem ein Teil des Druckfluids in der Drucckammer (24a, 26a) des entsprechenden Antriebszylinders (14, 16) in der Gegendruckkammer (24b, 26b) des entsprechenden Antriebszylinders (14, 16) gesammelt wird, umschaltet.

3. Druckverstärker nach Anspruch 2, wobei
jedes der Vorsteuerventile (72, 74) eine Schubstange (82) aufweist, die so konfiguriert ist, dass sie durch die Vorspannkraft einer Feder (102) in das Innere der Gegendruckkammer (24b, 26b) des entsprechenden Antriebszylinders (14, 16) ragt; und
der Kolben (36, 38) des entsprechenden Antriebszylinders (14, 16) am beweglichen Ende an der Schubstange (82) zur Anlage kommt.

4. Druckverstärker nach Anspruch 3, wobei ein Schalldämpfer (62, 70) in einem Kanal vorgesehen ist, durch den das unter Druck stehende Fluid in jeder der Gegendruckkammern (24b, 26b) der Antriebszylinder (14, 16) abgeleitet wird.

5. Druckverstärker nach Anspruch 3, wobei:
jede der Schubstangen (82) einen Kolbenabschnitt (82b) aufweist;
ein Raum auf einer ersten Seite des Kolbenabschnitts (82b) einer Atmosphäre ausgesetzt ist, während ein Raum auf einer zweiten Seite des Kolbenabschnitts (82b) mit einem Vorsteuerkanal (86b1, 86b2, 86c1, 86c2) zum Schalten der Zustände des Paars von Betriebsventilen (48, 52) verbunden ist; und
wenn der Kolben (36, 38) jedes der Antriebszylinder (14, 16) nicht an der Schubstange (82) anliegt, der Raum auf der ersten Seite des Kolbenabschnitts (82b) und der Raum auf der zweiten Seite des Kolbenabschnitts (82b) über ein in der Schubstange (82) ausgebildetes Loch (82e) miteinander kommunizieren.

6. Druckverstärker nach Anspruch 5, wobei:
jedes der Vorsteuerventile (72, 74) ein Ventilelement (80) aufweist, mit dem die entsprechende Schubstange (82) in Anlage bringbar ist; und
wenn der Kolben (36, 38) jedes der Antriebszylinder (14, 16) in Anlage mit der Schubstange (82) kommt und dann die Schubstange (82) in Anlage mit dem Ventilelement (80) bringt, der Raum auf der zweiten Seite des Kolbenabschnitts (82b) mit der Druckfluidversorgungsquelle verbunden ist und gegenüber dem in der Schubstange (82) ausgebildeten Loch (82e) abgedichtet ist.

7. Druckverstärker nach Anspruch 5, wobei:
jede der Schubstangen (82) gleitend innerhalb eines Ventilsitzes (76) und eines Ventilsitzhalters (78) angeordnet ist;
eine erste Endfläche des Ventilsitzhalters (78) der Gegendruckkammer (24b, 26b) des entsprechenden Antriebszylinders (14, 16) zugewandt ist, während eine zweite Endfläche desselben an dem Ventilsitz (76) anliegt; und
der Raum auf der ersten Seite des Kolbenabschnitts (82b) eine Nut (100) aufweist, die auf der zweiten Endfläche des Ventilsitzhalters (78) ausgebildet ist.

8. Druckverstärker (120) mit einem Verstärkerzylinder (12) und Antriebszylindern (14, 16), die jeweils auf beiden Seiten des Verstärkerzylinders angeordnet sind, **gekennzeichnet durch:**
ein Paar Vorsteuerventile (72, 74), die jeweils so konfiguriert sind, dass sie betätigt werden, wenn ein Kolben (36, 38) des entsprechenden Antriebszylinders (14, 16) an einem beweglichen Ende des Kolbens an das Vorsteuerventil (72, 74) anstößt; und
ein Paar Betätigungsventile (48, 52), die jeweils so konfiguriert sind, dass sie einen Zustand der Zufuhr von unter Druck stehendem Fluid von einer Druckfluidzufuhrquelle zwischen Druckkammern (24a, 26a) der Antriebszylinder (14, 16) umschalten, wobei
wenn jedes der Vorsteuerventile (72, 74) betätigt wird, Druckfluid aus dem Verstärkerzylinder (12) über das entsprechende Vorsteuerventil (72, 74) dem Paar von Betriebsventilen (48, 52) zugeführt wird, um dadurch den Versorgungszustand des Druckfluids umzuschalten.

9. Druckverstärker nach Anspruch 8, wobei jedes der Betriebsventile (48, 52) zwischen einem Zustand, in dem das Druckfluid von der Druckfluidversorgungsquelle der Druckkammer (24a, 26a) des entsprechenden Antriebszylinders (14, 16) zugeführt wird, und Druckfluid in einer Gegendruckkammer (24b, 26b) des entsprechenden Antriebszylinders (14, 16) entladen wird, und einem Zustand, in dem ein Teil des Druckfluids in der Druckkammer (24a, 26a) des entsprechenden Antriebszylinders (14, 16) in der Gegendruckkammer (24b, 26b) des entsprechenden Antriebszylinders (14, 16) gesammelt wird, umschaltet.

10. Druckverstärker nach Anspruch 9, wobei:
jedes der Vorsteuerventile (72, 74) eine Schubstange (82) aufweist, die so konfiguriert ist, dass sie durch die Vorspannkraft einer Feder (102) in das Innere der Gegendruckkammer (24b, 26b) des entsprechenden Antriebszylinders (14, 16) ragt; und
der Kolben (36, 38) des entsprechenden Antriebszylinders (14, 16) am beweglichen Ende an der Schubstange (82) zur Anlage kommt.

11. Druckverstärker nach Anspruch 10, wobei ein Schalldämpfer (62, 70) in einem Kanal vorgesehen ist, durch den das Druckfluid in jeder der Gegendrucckammern (24b, 26b) der Antriebszylinder (14, 16) abgeleitet wird.

12. Druckverstärker nach Anspruch 10, wobei:
jede der Schubstangen (82) einen Kolbenabschnitt (82b) aufweist;
ein Raum auf einer ersten Seite des Kolbenabschnitts (82b) einer Atmosphäre ausgesetzt ist, während ein Raum auf einer zweiten Seite des Kolbenabschnitts (82b) mit einem Vorsteuerkanal (86b1, 86b2, 86c1, 86c2) zum Schalten der Zustände des Paars von Betriebsventilen (48, 52) verbunden ist; und
wenn der Kolben (36, 38) jedes der Antriebszylinder (14, 16) nicht an der Schubstange (82) anliegt, der Raum auf der ersten Seite des Kolbenabschnitts (82b) und der Raum auf der zweiten Seite des Kolbenabschnitts (82b) über ein in der Schubstange (82) ausgebildetes Loch (82e) miteinander kommunizieren.

13. Druckverstärker nach Anspruch 12, wobei:
jedes der Vorsteuerventile (72, 74) ein Ventilelement (80) aufweist, an dem die entsprechende Schubstange (82) anlegbar ist; und
wenn der Kolben (36, 38) jedes der Antriebszylinder (14, 16) in Anlage mit der Schubstange (82) kommt und dann die Schubstange (82) in Anlage mit dem Ventilelement (80) bringt, der Raum auf der zweiten Seite des Kolbenabschnitts (82b) mit einer entsprechenden Verstärkerkammer (22a, 22b) des Verstärkerzylinders (12) verbunden ist und gegenüber dem in der Schubstange (82) ausgebildeten Loch (82e) abgedichtet ist.

14. Druckverstärker nach Anspruch 12, wobei:
jede der Schubstangen (82) gleitend innerhalb eines Ventilsitzes (76) und eines Ventilsitzhalters (78) angeordnet ist; eine erste Endfläche des Ventilsitzhalters (78) der Gegendruckkammer (24b, 26b) des entsprechenden Antriebszylinders (14, 16) zugewandt ist, während eine zweite Endfläche desselben an dem Ventilsitz (76) anliegt; und
der Raum auf der ersten Seite des Kolbenabschnitts (82b) eine Nut (100) aufweist, die auf der zweiten Endfläche des Ventilsitzhalters (78) ausgebildet ist.

## Revendications

1. Multiplicateur de pression (10, 120) incluant un cylindre multiplicateur (12) et des cylindres d'entraînement (14, 16) disposés respectivement de chaque côté du cylindre multiplicateur, **caractérisé en ce que** :
une paire de soupapes pilotes (72, 74) respectivement configurées pour être actionnées lorsqu'un piston (36, 38) du cylindre d'entraînement (14, 16) correspondant est en butée avec la soupape pilote (72, 74) à une extrémité mobile du piston ; et
une paire de soupapes de commande (48, 52) respectivement configurées pour commuter un état d'alimentation en fluide sous pression à partir d'une source d'alimentation en fluide sous pression, entre des chambres de pression (24a, 26a) des cylindres d'entraînement (14, 16), dans lequel :
lorsque chacune des soupapes pilotes (72, 74) est actionnée, le fluide sous pression est alimenté vers la paire de soupapes de commande (48, 52) par le biais de la soupape pilote (72, 74) correspondante pour ainsi commuter l'état d'alimentation en fluide sous pression.

2. Multiplicateur de pression selon la revendication 1, dans lequel chacune des soupapes de commande (48, 52) commute entre un état dans lequel le fluide sous pression est alimenté vers la chambre de pression (24a, 26a) du cylindre d'entraînement (14, 16) correspondant et du fluide sous pression dans une chambre de pression arrière (24b, 26b) du cylindre d'entraînement (14, 16) correspondant est déchargé, et un état dans lequel une partie du fluide sous pression dans la chambre de pression (24a, 26a) du cylindre d'entraînement (14, 16) correspondant est collectée dans la chambre de pression arrière (24b, 26b) du cylindre d'entraînement (14, 16) correspondant.

3. Multiplicateur de pression selon la revendication 2, dans lequel :
chacune des soupapes pilotes (72, 74) inclut une tige de poussée (82) configurée pour faire saillie vers un intérieur de la chambre de pression arrière (24b, 26b) du cylindre d'entraînement (14, 16) correspondant sous l'effet d'une force de sollicitation d'un ressort (102) ; et
le piston (36, 38) du cylindre d'entraînement (14, 16) correspondant vient en butée avec la tige de poussée (82) à l'extrémité mobile.

4. Multiplicateur de pression selon la revendication 3, dans lequel un silencieux (62, 70) est disposé dans un canal à travers lequel le fluide sous pression dans chacune des chambres de pression arrières (24b, 26b) des cylindres d'entraînement (14, 16) est déchargé.

5. Multiplicateur de pression selon la revendication 3, dans lequel :
chacune des tiges de poussée (82) inclut une partie de piston (82b) ;
un espace sur un premier côté de la partie de piston (82b) est exposé à une atmosphère tandis qu'un espace sur un deuxième côté de la partie de piston (82b) est relié à un canal pilote (86b1, 86b2, 86c1, 86c2) pour commuter les états de la paire de soupapes de commande (48, 52) ; et
lorsque le piston (36, 38) de chacun des cylindres d'entraînement (14, 16) n'est pas en butée avec la tige de poussée (82), l'espace sur le premier côté de la partie de piston (82b) et l'espace sur le deuxième côté de la partie de piston (82b) communiquent l'un avec l'autre par un trou (82e) formé à l'intérieur de la tige de poussée (82).

6. Multiplicateur de pression selon la revendication 5, dans lequel :
chacune des soupapes pilotes (72, 74) inclut un élément de soupape (80) avec lequel la tige de poussée (82) correspondante peut venir en butée ; et
lorsque le piston (36, 38) de chacun des cylindres d'entraînement (14, 16) vient en butée avec la tige de poussée (82) et puis amène la tige de poussée (82) en butée avec l'élément de soupape (80), l'espace sur le deuxième côté de la partie de piston (82b) est relié à la source d'alimentation en fluide sous pression et isolé du trou (82e) formé à l'intérieur de la tige de poussée (82).

7. Multiplicateur de pression selon la revendication 5, dans lequel :
chacune des tiges de poussée (82) est disposée de façon coulissante à l'intérieur d'un siège de soupape (76) et d'un moyen de retenue de siège de soupape (78) ;
une première face terminale du moyen de retenue de siège de soupape (78) est tournée vers la chambre de pression arrière (24b, 26b) du cylindre d'entraînement (14, 16) correspondant tandis qu'une deuxième face terminale de celui-ci est en butée avec le siège de soupape (76) ; et
l'espace sur le premier côté de la partie de piston (82b) inclut une rainure (100) formée sur la deuxième face terminale du moyen de retenue de siège de soupape (78) .

8. Multiplicateur de pression (120) incluant un cylindre multiplicateur (12) et des cylindres d'entraînement (14, 16) disposés respectivement de chaque côté du cylindre multiplicateur, **caractérisé en ce que** :
une paire de soupapes pilotes (72, 74) respectivement configurées pour être actionnées lorsqu'un piston (36, 38) du cylindre d'entraînement (14, 16) correspondant est en butée avec la soupape pilote (72, 74) à une extrémité mobile du piston ; et
une paire de soupapes de commande (48, 52) respectivement configurées pour commuter un état d'alimentation en fluide sous pression à partir d'une source d'alimentation en fluide sous pression, entre des chambres de pression (24a, 26a) des cylindres d'entraînement (14, 16), dans lequel :
lorsque chacune des soupapes pilotes (72, 74) est actionnée, du fluide sous pression venant du cylindre multiplicateur (12) est alimenté vers la paire de soupapes de commande (48, 52) par le biais de la soupape pilote (72, 74) correspondante pour ainsi commuter l'état d'alimentation en fluide sous pression.

9. Multiplicateur de pression selon la revendication 8, dans lequel chacune des soupapes de commande (48, 52) commute entre un état dans lequel le fluide sous pression venant de la source d'alimentation en fluide sous pression est alimenté vers la chambre de pression (24a, 26a) du cylindre d'entraînement (14, 16) correspondant et du fluide sous pression dans une chambre de pression arrière (24b, 26b) du cylindre d'entraînement (14, 16) correspondant est déchargé, et un état dans lequel une partie du fluide sous pression dans la chambre de pression (24a, 26a) du cylindre d'entraînement (14, 16) correspondant est collectée dans la chambre de pression arrière (24b, 26b) du cylindre d'entraînement (14, 16) correspondant.

10. Multiplicateur de pression selon la revendication 9, dans lequel :
chacune des soupapes pilotes (72, 74) inclut une tige de poussée (82) configurée pour faire saillie vers un intérieur de la chambre de pression arrière (24b, 26b) du cylindre d'entraînement (14, 16) correspondant sous l'effet d'une force de sollicitation d'un ressort (102) ; et
le piston (36, 38) du cylindre d'entraînement (14, 16) correspondant vient en butée avec la tige de poussée (82) à l'extrémité mobile.

11. Multiplicateur de pression selon la revendication 10, dans lequel un silencieux (62, 70) est disposé dans un canal à travers lequel le fluide sous pression dans chacune des chambres de pression arrières (24b, 26b) des cylindres d'entraînement (14, 16) est déchargé.

12. Multiplicateur de pression selon la revendication 10, dans lequel :
chacune des tiges de poussée (82) inclut une partie de piston (82b) ;
un espace sur un premier côté de la partie de piston (82b) est exposé à une atmosphère tandis qu'un espace sur un deuxième côté de la partie de piston (82b) est relié à un canal pilote (86b1, 86b2, 86c1, 86c2) pour commuter les états de la paire de soupapes de commande (48, 52) ; et
lorsque le piston (36, 38) de chacun des cylindres d'entraînement (14, 16) n'est pas en butée avec la tige de poussée (82), l'espace sur le premier côté de la partie de piston (82b) et l'espace sur le deuxième côté de la partie de piston (82b) communiquent l'un avec l'autre par le biais d'un trou (82e) formé à l'intérieur de la tige de poussée (82).

13. Multiplicateur de pression selon la revendication 12, dans lequel :
chacune des soupapes pilotes (72, 74) inclut un élément de soupape (80) avec lequel la tige de poussée (82) correspondante peut venir en butée ; et
lorsque le piston (36, 38) de chacun des cylindres d'entraînement (14, 16) vient en butée avec la tige de poussée (82) et puis amène la tige de poussée (82) en butée avec l'élément de soupape (80), l'espace sur le deuxième côté de la partie de piston (82b) est relié à une chambre multiplicatrice (22a, 22b) correspondante du cylindre multiplicateur (12) et isolé du trou (82e) formé à l'intérieur de la tige de poussée (82).

14. Multiplicateur de pression selon la revendication 12, dans lequel :
chacune des tiges de poussée (82) est disposée de façon coulissante à l'intérieur d'un siège de soupape (76) et d'un moyen de retenue de siège de soupape (78) ;
une première face terminale du moyen de retenue de siège de soupape (78) est tournée vers la chambre de pression arrière (24b, 26b) du cylindre d'entraînement (14, 16) correspondant tandis qu'une deuxième face terminale de celui-ci est en butée avec le siège de soupape (76) ; et
l'espace sur le premier côté de la partie de piston (82b) inclut une rainure (100) formée sur la deuxième face terminale du moyen de retenue de siège de soupape (78) .
